Europäisches Patentamt

European Patent Office

Office européen des brevets

(19)

(11) **EP 0 866 774 B1**

(12) **EUROPÄISCHE PATENTSCHRIFT**

(45) Veröffentlichungstag und Bekanntmachung des Hinweises auf die Patenterteilung:
**09.06.1999 Patentblatt 1999/23**

(21) Anmeldenummer: **96946200.1**

(22) Anmeldetag: **11.12.1996**

(51) Int Cl.[6]: **C02F 3/12**, C02F 3/30

(86) Internationale Anmeldenummer:
**PCT/DE96/02423**

(87) Internationale Veröffentlichungsnummer:
**WO 97/22561 (26.06.1997 Gazette 1997/27)**

(54) **EINBECKEN-KLÄRANLAGE**

SINGLE-TANK SEWAGE TREATMENT PLANT

STATION D'EPURATION A UN SEUL BASSIN

(84) Benannte Vertragsstaaten:
**AT BE CH DK ES FI FR GB GR IT LI NL PT SE**

(30) Priorität: **15.12.1995 DE 29519886 U**

(43) Veröffentlichungstag der Anmeldung:
**30.09.1998 Patentblatt 1998/40**

(73) Patentinhaber: **E.V.U. Entwicklung von Umwelttechnik GmbH**
**01277 Dresden (DE)**

(72) Erfinder:
- **KOCH, Reinhard**
  **D-01609 Gröditz (DE)**
- **PEUKERT, Volkmar**
  **D-01307 Dresden (DE)**

(74) Vertreter: **Hofmann, Klaus**
**World Trade Center,**
**Ammonstrasse 72**
**01067 Dresden (DE)**

(56) Entgegenhaltungen:
DE-C- 19 512 907          GB-A- 2 138 797
US-A- 5 395 527           US-A- 5 503 748

- **WATER RESEARCH, Bd. 29, Nr. 12, 1.Dezember 1995, Seiten 2627-2634, XP000537333 ROVATTI M ET AL: "PHOSPHORUS REMOVAL IN FLUIDIZED BED BIOLOGICAL REACTOR (FBBR)"**

**Beschreibung**

Die Erfindung betrifft eine Einbecken-Kläranlage zur biologischen Reinigung organisch belasteter kommunaler, industrieller und landwirtschaftlicher Abwässer mit Belebtschlamm- und Biofilmtechnologie.

Einbecken-Kläranlagen bei denen die Verfahrensschritte Füllen des Reaktors mit Abwasser aus einem Abwasserspeicher, biologische Reinigung durch Belebtschlamm, Sedimentation des Belebtschlammes und Entnahme des gereinigten Abwassers nacheinander in einem Becken ablaufen gehören zum Stand der Abwassertechnik.

Ein wesentlicher Nachteil der Anlagen ist, daß die Sedimentation von suspendierter Biomasse (Belebtschlamm) sehr zeitaufwendig ist und sich die Biomasse nur unzureichend eindickt. Die Belebtschlammkonzentrationen sind daher während der Reinigungsphase relativ gering. Dies begrenzt die Belastbarkeit bekannter Anlagen.

Höhere Biomassekonzentration können in der Anlage nur auf Kosten des für den Austausch des Abwassers erforderlichen Beckenvolumens erreicht werden.

Ein weiterer Nachteil ist, daß die Beschaffenheit des Belebtschlammes in Abhängigkeit von Belastung, Wassertemperatur, Sauerstoffversorgung und Turbulenz im Reaktor Schwankungen unterliegt, die sich in unterschiedlichem Maße auf Konzentration und Leistung sowie Eindickverhalten und Sedimentationsgeschwindigkeit des Schlammes auswirken.

Die genannten Nachteile haben zur Folge, daß das biologische Leistungspotential des Reaktors begrenzt und nicht genau kalkulierbar ist, und daß das Volumenverhältnis zwischen sedimentierter Biomasse und nutzbarem Beckenvolumen für den Abwasseraustausch ungünstig ist.

Die biologische Elimination von Stickstoff durch Nitrifikation und Denitrifikation sowie von Phosphor durch zelluläre Speicherung ist in derartigen Anlagen in gewissen Maße, jedoch mit einem erheblichen Aufwand an Beckenvolumen, Steuertechnik und Wartung, möglich.

Die für eine weitergehende Abwasserreinigung erforderlichen anoxischen und anaeroben Verfahrensstufen lassen sich aufgrund relativ niedriger Biomassekonzentrationen nur durch zeitaufwendige Zyklen ohne Luftzufuhr realisieren.

Der für die Realisierung anoxischer und anaerober Phasen sowie für Sedimentation des Schlammes und Entnahme des gereinigten Abwassers erforderliche Zeitaufwand wirkt sich bei derartigen Anlagen nachteilig auf die Belastbarkeit und die Effektivität aus.

Aufgabe der Erfindung ist die Entwicklung einer Einbecken-Kläranlage ohne die vorgenannten Nachteile.

Erfindungsgemäß wird eine Einbecken-Kläranlage vorgeschlagen, die eine Kopplung von einer Belebtschlammbiologie mit einer Biofilmbiologie ermöglicht.

Dabei wird ein Teil der für die Abwasserreinigung erforderlichen Organismen auf Aufwuchskörpern angesiedelt. Die Körper haben ein spezifisches Gewicht von über 1,0 g/cm$^3$, vorzugsweise 1,1 - 1,3 g/cm$^3$. Sie werden bei Lufteintrag verwirbelt und sie sedimentieren bei Belüftungspausen deutlich schneller als Belebtschlamm.

Die Körper bilden nach der Sedimentation ein genau begrenztes biologisch aktives Festbett.

Auf der Oberfläche der Körper siedeln sich in einem Biofilm spezielle Mikroorganismen an, die auch bei der Entnahme von Belebtschlamm in der Anlage verbleiben.

Durch die verfahrenstechnische Kopplung von Biofilm- und Belebtschlammbiologie wird die Konzentration aktiver Biomasse und somit das Leistungspotential der Anlage - ohne weitere Inanspruchnahme von Beckenvolumen - deutlich erhöht. Dadurch wird das Verhältnis zwischen Sedimentationsraum und Nutzvolumen für den Abwasseraustausch günstig beeinflußt.

Die Volumenverhältnisse im Reaktor und die verfügbare Biomasse sind konstant und somit verfahrenstechnisch kalkulierbar. Die höheren Biomassekonzentrationen erlauben eine größere Belastbarkeit der Anlage bei gleichbleibenden Reinigungszielen.

Durch die hohe Sedimentationsgeschwindigkeit der mit Organismen bewachsenen Aufwuchskörper kann - nach Abschalten der Belüftung - in kurzer Zeit das aerobe Wirbelbett in ein anoxisches Fest-/Fließbett umgewandelt werden.

Der Lufteintrag in den Reaktor kann auch in einer Weise erfolgen, daß sich Zonen mit unterschiedlicher Sauerstoffversorgung ausbilden. Dadurch laufen räumlich nebeneinander aerobe Prozesse, mit Nitrifikation, und anoxische Prozesse, mit Denitrifikation, ab.

Die Erfindung und deren Funktionsweise wird nachfolgend am Beispiel einer Einbecken-Kläranlage mit einem Volumen von 100 m$^3$, einem Durchmesser von 5 m und einer Wassertiefe von 5 m beschrieben.

Der biologische Reinigungsprozeß wird zu einem Zeitpunkt mit geringem Abwasseranfall, z.B. 4 Uhr morgens, durch Abschalten der Abwasserzulaufpumpe und der Belüftung beendet und gleichzeitig die Sedimentationsphase eingeleitet. Das danach noch der Kläranlage zufließende Abwasser wird im Speicher der Pumpstation 1 zeitweilig zurückgehalten. Die Anlage ist mit 20 m$^3$ walzenförmigen Aufwuchskörpern 4 mit einem spezifischem Gewicht von 1,2 g/cm$^3$, einer besiedelbaren Oberfläche von 600 m$^2$ pro m$^3$ Schüttvolumen und einem Freiraum von 0,7 m$^3$ pro m$^3$ Schüttvolumen gefüllt.

Die während der Belüftungsphase verwirbelten Aufwuchsträger 1 sedimentieren nach Abschalten der Belüftung 5 innerhalb von 5 Minuten auf den Boden der Anlage und bilden dort ein räumlich definiertes, biologisch aktives Festbett mit einer Schütthöhe von 1,0 m.

Die Sedimentation des Belebtschlammes 3 ist nach etwa 0,5 Stunden beendet. Der Schlamm reichert sich in den Zwischenräumen der Aufwuchsträger 4 an und bildet über dem Festbett eine etwa 0,3 m dicke Schicht.

Das Volumen der Klarphase die sich zwischen Wasserspiegel und Belebtschlammschicht ausbildet beträgt etwa 70 m$^3$.

Nach der Sedimentationsphase wird eine Pumpe 6 - die in der Nähe der Schlammschicht angeordnet ist - in Betrieb genommen. Sie befördert den im Überschuß produzierten Schlamm in einen Schlammspeicher.

Der Entnahmeprozeß wird nach einer vorgebenen Zeit oder durch eine im Zulauf zum Schlammspeicher angebrachte Trübungsmeßsonde unterbrochen.

Die im Schlammspeicher verdrängte Klarphase fließt in den Speicher der Abwasserpumpstation zurück.

Nach der Schlammentnahme wird das gereinigte Abwasser über einen Zeitraum von ca. 40 Minuten abgepumpt. Dies erfolgt durch die Schlammpumpe 6 indem der Zulauf zum Schlammspeicher abgeschiebert und die Leitung zum Ablauf geöffnet wird.

Die Entnahme der Klarphase 2 kann auch durch eine separate Pumpe oder über einen Schieber erfolgen.

Nach der Entnahme der Klarphase werden eventuell auf der Oberfläche angereicherte Schwimmstoffe in den Schlammspeicher gepumpt.

Nach Abschluß der etwa 1 - 2 Stunden andauernden Sedimentations- und Entnahmephase wird der Einbekken-Kläranlage das in der Pumpstation gespeicherte und das momentan zufließende ungereinigte Abwasser zugeführt.

Während der Sedimentations- und Entnahmephase bilden sich im Festbett anaerob-anoxische Milieuverhältnisse aus. Dabei wird Nitrat-Stickstoff zu gasförmigen Stickstoff denitrifiziert.

Nach Abschluß der Denitrifikation setzen anaerob-hydrolytische Prozesse ein, die einen Teil der höhermolekularen organischen Stoffe in niedermolekulare aufspalten. Diese Hydrolyseprodukte werden bevorzugt von Phosphor speichernden Organismen als Nährsubstrate aufgenommen.

Die anaeroben Stoffwechselprozesse werden durch die Zugabe frischem Abwassers intensiviert.

Durch kurz bemessenen Lufteintrag werden der Belebtschlamm und die auf den Aufwuchsträgern 4 angesiedelten Mikroorganismen in vorgegebenen Zeitabständen mit dem frischen Abwasser in Kontakt gebracht. Die kurzzeitige Umwälzung durch Luft wird in Abständen von ca. 30 Minuten bis zu einer Zeitdauer von ca. 1,5 - 2,0 Stunden wiederholt.

Nach der Hydrolyse- und Versäuerungsphase, die vor allem dem Wachstum Phosphor speichernder Mikroorganismen dient, wird das anaerobe Festbett durch intensiven Luftsauerstoff in ein aerobes Wirbelbett umgewandelt. Während der Belüftungsphase werden organische Stoffe abgebaut, Phosphor biologisch eliminiert und Ammonium-Stickstoff zu Nitrat-Stickstoff oxidiert.

Das Beckenvolumen ist so bemessen, daß danach das gesamte am Tag anfallende Schmutz- und Fremdwasser kontinuierlich - ohne weitere Zwischenspeicherung - der Anlage zugeführt und gereinigt werden kann.

Nach einer mehrstündigen intensiven Belüftungsphase wird der Reaktor so betrieben, daß Nitrifikations- und Denitrifikationsprozesse simultan ablaufen können. Dies erfolgt in der Weise, daß nur bestimmte Belüftergruppen oder einzelne Belüfter 5 mit Luft beschickt werden. Dadurch bilden sich im Reaktor Bereiche, die ausreichend mit Sauerstoff versorgt werden und in denen eine Nitrifikation von Ammonium möglich ist, und Bereiche ohne oder nur mit geringen Konzentrationen an gelöstem Sauerstoff in denen Denitrifikationsprozesse ablaufen können.

Im Innern der walzenförmigen Aufwuchskörper 4 werden unabhängig vom Sauerstoffangebot ständig auch Denitrifikationsprozesse ablaufen.

Die Zeitdauer und der Zeitabstand von Phasen mit intensivem oder mit reduziertem Lufteintrag werden in Abhängigkeit von der Zulaufbelastung und den Reinigungszielen festgelegt.

Bei erhöhten Anforderungen an die Elimination von Phosphor, wird in vorgegebenen Zeitabständen zusätzlich die Belüftung abgeschaltet. Während der verkürzten Sedimentationsphasen setzen die bereits beschriebenen anoxisch-anaeroben Prozesse ein.

Nach Abschluß der biologischen Prozesse wird durch Abschalten der Belüftung und der Zulaufpumpe erneut die Sedimentations- und Entnahmephase eingeleitet.

Der Vorteil der verfahrenstechnischen Kopplung von Belebtschlammbiologie mit Biofilmbiologie wird nachfolgend an Berechnungsbeispielen dargestellt.

1. Verhältnisse in einem Reaktor der nur mit Belebtschlamm betrieben wird:

| | |
|---|---|
| Reaktornutzvolumen | 100,0 m$^3$ |
| Reaktordurchmesser | 5,0 m |

(fortgesetzt)

| Reaktortiefe | 5,0 m |
|---|---|
| Eindickzone | 30 Vol.% = 30 m$^3$ bei H = 1,5 m |
| Austauschzone | 70 Vol.% = 70 m$^3$ bei H = 3,5 m |

Reinigungsziel ist eine Abwasserreinigung mit Schlammstabilisierung.

| Biomassekonzentrationen Belebtschlamm: | | |
|---|---|---|
| während Belüftung | 2,5 kgTS/m$^3$ | 250 kgTS |
| nach Sedimentation | 8,3 kgTS/m$^3$ | 250 kgTS |
| BSB-Schlammbelastung | = | 0,04 kgBSB/kgTS*d |
| TS im Reaktor | = | 250 kgTS |
| BSB-Belastung des Reaktors | 250 * 0.04 = | 10 kgBSB/d |
| Einwohnergleichwert (EGW) | = | 0.06 kgBSB/E*d |
| max. Anschluß | = | 170 EGW |

2. Verhältnisse in einem Reaktor, der mit Belebtschlamm- und Biofilmbiologie betrieben wird:

| Reaktornutzvolumen | 100,0 m$^3$ |
|---|---|
| Reaktordurchmesser | 5,0 m |
| Reaktortiefe | 5,0 m |
| Eindickzone | 30 Vol.% = 30 m$^3$ bei H = 1,5 m |
| Austauschzone | 70 Vol.% = 70 m$^3$ bei H = 3,5 m |

| Biofilmbiologie: | |
|---|---|
| Schüttvolumen Aufwuchsträger 20 Vol.% = | 20 m$^3$ |
| Oberfläche der Aufwuchsträger = | 600 m$^2$/m$^3$ |
| Schüttvolumen gesamt = | 12.000 m$^2$ |
| BSB-Oberflächenbelastung = | 2.0 g BSB/m$^2$*d |
| BSB-Oberflächenbelastung gesamt = | 24 kg BSB/d |
| Einwohnergleichwerte bei 0,06 kgBSB/E*d = | 400 EGW |

| Belebtschlammbiologie: | |
|---|---|
| Freiraum zwischen Aufwuchskörpern = | 14 m |
| TS zwischen Aufwuchskörpern bei 3,5 kg/m$^3$= | 49 kg TS |
| Schlammschicht über Festbett, 10 Vol.% = | 10 m$^3$ |
| TS in Schlammschicht über Festbett = | 8,0 kg/m3 |
| TS in Schlammschicht = | 80 kgTS |
| TS gesamt in Eindickzone = | 129 kgTS |
| BSB-Schlammbelastung = | 0,04 kgBSB/kgTS*d |
| TS im Reaktor = | 129 kgTS |
| BSB-Belastung des Reaktors 129*0,04 = | 5,2 kgBSB/d |
| Einwohnergleichwerte bei 0,06 kgBSB/E*d = | 86 EGW |

Summe BSB-Belastung Belebtschlamm + Biofilmbiologie

$$5,2 + 24 = 29,2 \text{ kg BSB/d}$$

Dies entspricht einem Anschlußwert von ca. 480 EGW.

Der Vergleich zeigt, daß das Reinigungspotential bei Reaktoren die mit Belebtschlamm- und Biofilmbiologie betrieben werden mindestens doppelt so hoch ist.

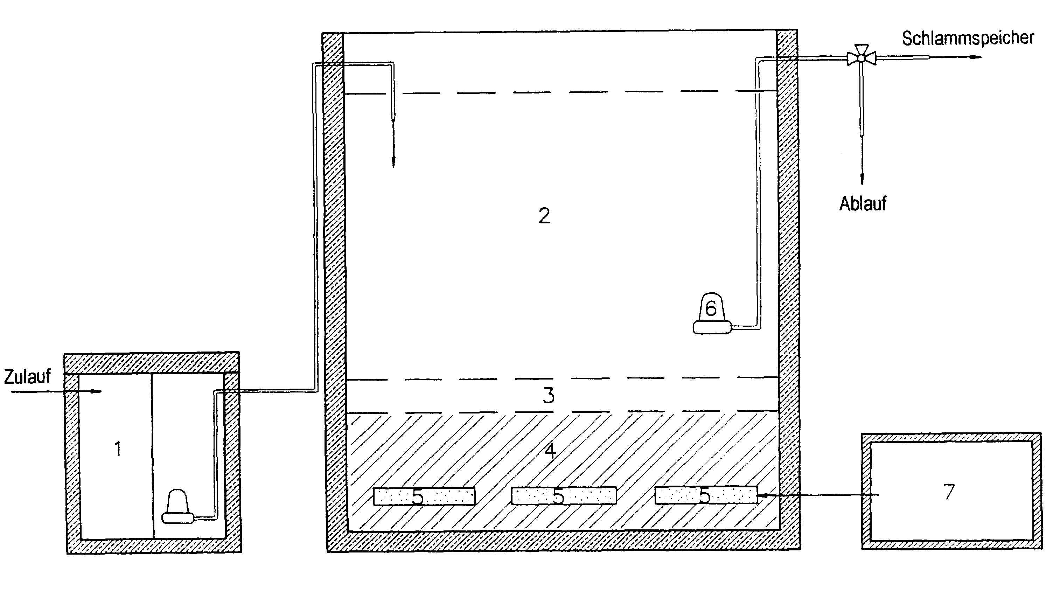

**Patentansprüche**

1. Einbecken-Kläranlage zur biologischen Reinigung organisch belasteter kommunaler, industrieller und landwirtschaftlicher Abwässer, dadurch gekennzeichnet, daß

   - die Einbecken-Kläranlage teilweise mit verwirbelbaren und von Mikroorganismen besiedelbaren Aufwuchsträgern (4) mit einem spezifischen Gewicht von mehr als 1,0 g/cm$^3$ gefüllt ist,
   - die Schütthöhe im Reaktor auf weniger als 60 % der Wassersertiefe eingestellt ist,
   - Aufwuchsträger eingesetzt werden, deren Freiraum in ihrer Schüttmasse 400 bis 800 l pro m$^3$ beträgt,
   - die Aufwuchsträger eine Oberfläche von 300 bis 900 m$^2$/m$^3$ Schüttvolumen besitzen,
   - am Boden der Anlage Belüftungseinrichtungen (5) angeordnet sind,
   - der Zulauf zur Einrichtung mit einem Abwasserspeicher oder mit einer Pumpstation mit Abwasserspeicher (1) gekoppelt ist,
   - über den im Ruhezustand der Einbecken-Kläranlage sedimentierten Aufwuchsträgern (4) mindestens eine Pumpe (6) angeordnet ist, die mit einem Schlammspeicher bzw. dem Ablauf verbunden ist.

2. Einbecken-Kläranlage nach Anspruch 1, dadurch gekennzeichnet, daß die Aufwuchsträger (4) walzenförmig ausgebildet sind, eine Länge von 10 bis 25 mm, einen Außendurchmesser von 5 bis 10 mm und einen Innendurchmesser von 2 bis 8 mm besitzen.

3. Einbecken-Kläranlage nach den Ansprüchen 1 und 2, dadurch gekennzeichnet, daß die Aufwuchsträger (4) eine Dichte zwischen 1,1 und 1,3 g/cm$^3$ besitzen.

4. Einbecken-Kläranlage nach den Ansprüchen 1 bis 3, dadurch gekennzeichnet, daß die Schütthöhe der Aufwuchsträger (4) im Reaktor 10 bis 30 % der Wassertiefe beträgt.

5. Einbecken-Kläranlage nach den Ansprüchen 1 bis 4, dadurch gekennzeichnet, daß die Belüftungseinrichtungen (5) in Gruppen oder einzeln über eine Regeleinrichtung mit einem Gebläse (7) verbunden und ansteuerbar sind.

**Claims**

1. A single-basin waste treatment plant to biologically purify organically-polluted municipal, industrial and agricultural waste water, characterized in that:

   - the single-basin waste treatment plant is partially filled with swirlable growth substrates (4) (colonizable with microorganisms) with a specific weight of more than 1.0 g/cm$^3$,
   - the height of the growth substrate in the reactor is set to be less than 60 % of the water depth,
   - growth substrates are used that, as loose bulk, contain free space of 400 - 800 l per m$^3$,
   - the growth substrates have a surface of 300 - 900 m$^2$/m$^3$ bulk volume,
   - Ventilators (5) are provided on the floors of the system,
   - the feed to the device is coupled to a waste water reservoir or a pump station with a waste water reservoir (1),
   - there is at least one pump (6) above the growth substrate (4) that settles in the single-basin waste treatment system while in a resting state, and the pump is connected to a sludge reservoir or the drain.

2. A single-basin waste treatment system according to claim 1, characterized in that the growth substrate units (4) are designed in the shape of a cylinder, are 10-25 mm long, have an outer diameter of 5-10 mm and an inner diameter of 2-8 mm.

3. A single-basin waste treatment system according to claims 1 and 2, characterized in that the growth substrate units (4) have a density of 1.1 to 1.3 g/cm$^3$.

4. A single-basin waste treatment system according to claims 1-3, characterized in that the height of the growth substrate (4) in the reactor is 10-30 % of the water depth.

5. A single-basin waste treatment system according to claims 1-4, characterized in that the ventilators (5) are connected in groups or individually to a blower (7) via a controller and can be controlled.

**Revendications**

1. Installation d'épuration à un bassin pour l'épuration biologique d'eaux usées d'origine communale, industrielle et agricole organiquement chargées, caractérisée en ce que:

   - l'installation d'épuration à un bassin est partiellement remplie de supports d'accroissance (4) pouvant être aenés à tourbillonner et colonisés par des micro-organismes, et présentant un poids spécifique de plus de 1,0 g/cm$^3$,
   - la hauteur de déversement dans le réacteur est ajustée sur moins de 60 % de la profondeur de l'eau,
   - on utilise des supports d'accroissance dont l'espace pour le lavage à contre-courant est de 400 à 800 l par m$^3$ dans leur masse de vrac,
   - les supports d'accroissance présentent une surface de 300 à 900 m$^2$/m$^3$ en volume apparent,
   - des aérateurs (5) sont placés au fond de l'installation,
   - l'arrivée au dispositif est couplée à un réservoir d'eaux usées ou à une station de pompage avec réservoir d'eaux usées (1),
   - une pompe (6) au moins, qui est raccordée à un réservoir de vase ou à la sortie, est placée au-dessus des supports d'accroissance (4) sédimentés à l'état de repos de l'installation d'épuration à un bassin.

2. Installation d'épuration à un bassin selon la revendication 1, caractérisée en ce que les supports d'accroissance (4) sont réalisés sous forme de cylindres, présentent une longueur de 10 à 25 mm, un diamètre extérieur de 5 à 10 mm et un diamètre intérieur de 2 à 8 mm.

3. Installation d'épuration à un bassin selon les revendications 1 et 2, caractérisée en ce que les supports d'accroissance (4) présentent une densité comprise entre 1,1 et 1,3 g/cm$^3$.

4. Installation d'épuration à un bassin selon les revendications 1 à 3, caractérisée en ce que la hauteur de déversement des supports d'accroissance (4) dans le réacteur fait 10 à 30 % de la profondeur de l'eau.

5. Installation d'épuration à un bassin selon les revendications 1 à 4, caractérisée en ce que les aérateurs (5) sont raccordés à et peuvent être commandés en groupes ou individuellement par un dispositif de réglage comprenant une soufflerie (7).